# EUROPÄISCHE PATENTANMELDUNG

(11) **EP 0 623 758 A2**
(43) Veröffentlichungstag der Anmeldung: **09.11.1994**
(21) Anmeldenummer: 94810213.2
(22) Anmeldetag: 15.04.1994
(51) Int. Cl.: F16B 11/00, F16B 5/04, B32B 7/08, B32B 7/12

(54) **Sicherungsvorrichtung**

(30) Priorität: 07.05.1993 CH 1407/93
(71) Anmelder: ALUSUISSE-LONZA SERVICES Ltd., CH-8034 Zürich (CH)
(72) Erfinder: Waldeck, Klaus-Dieter, CH-8954 Geroldswil (CH); Melina, Vito, CH-5000 Aarau (CH)

(57) **Zusammenfassung**

Sicherungsvorrichtung für mittels elastischer Klebstoffe flächig gegeneinander haftend zusammengefügte Gegenstände (1,2), wie beispielsweise Bleche, Platten, Profile oder Träger. Die Gegenstände werden mittels eines Klebstoffes (9), der beispielsweise ein beidseitig klebendes Klebband sein kann, zusammengefügt. Ein Gegenstand weist Ausnehmungen ((3,4) auf und durch die Ausnehmungen greifen stiftartige Elemente (5,6), die im zweiten Element festgelegt sind. Die stiftartigen Elemente weisen einen Kopf (10,11) auf, der mit der Oberfläche des ersten Elementes bündig ist oder in geringem Abstand davon ist. Der Durchmesser des Kopfes ist grösser als der Durchmesser der Ausnehmung. Der Durchmesser des Körpers des stiftartigen Elementes ist kleiner als der Durchmesser der Ausnehmung. Die Klebeverbindung erlaubt bei hoher Belastung eine minimale horizontale Verschiebung der Gegenstände gegeneinander, verhindert jedoch eine vertikale Verschiebung der Gegenstände gegeneinander. Bei hoher Beanspruchung und dem Auftreten von Schälkräften wird die Verklebung durch die Sicherungsvorrichtung unterstützt.

## Beschreibung

Die Erfindung betrifft eine Sicherungsvorrichtung für mittels elastischer Klebstoffe flächig gegeneinander haftend zusammengefügte Gegenstände.

Es ist bekannt, Gegenstände oder Formkörper, die trennfest miteinander verbunden werden sollen, mit Hilfe eines Klebstoffes zusammenzufügen. Damit der Klebestoff wirksam werden kann, ist es zweckmässig, dass die zu fügenden Gegenstände zueinander kongruente Flächen aufweisen. Die Flächen können partiell oder vollflächig mit Klebstoff beaufschlagt werden. In der Regel durch Druck und/oder Wärme entfaltet der Klebstoff seine haftende Wirkung und verbindet die Gegenstände trennfest. Die Klebstoffe können ein elastisches Verhalten zeigen.

Klebeverbindungen zwischen Gegenständen werden fallweise zur Unterstützung der Haftung und/oder zur Sicherung, beispielsweise durch gleichzeitiges Verschrauben oder Vernieten der Gegenstände, zusätzlich gesichert.

Durch solche mechanischen Sicherungen werden die Eigenschaften einer elastisch bleibenen Verklebung aber aufgegeben.

Aufgabe vorliegender Erfindung ist es, elastische Verklebungen zwischen zwei Gegenständen derart zu sichern, dass die Elastizität der Klebung erhalten bleibt, dass aber bei einem Versagen der Klebung die Gegenstände miteinander verbunden bleiben.

Erfindungsgemäss wird dies dadurch erreicht, dass
ein erster Gegenstand eine erste Klebefläche aufweist
und
ein zweiter Gegenstand eine zweite Klebefläche aufweist
und
die Klebeflächen einander gegenüberliegen
und
zwischen den Klebeflächen ein Klebstoff angeordnet ist
und
der erste Gegenstand, im Bereich der ersten Klebefläche, eine oder mehrere Ausnehmungen aufweist
und
der zweite Gegenstand im Bereich der zweiten Klebefläche und durch die Ausnehmungen des ersten Gegenstandes hindurchgreifend stiftartige Elemente aufweist
und
der Querschnitt der Ausnehmungen des ersten Gegenstand grösser ist als der Querschnitt der stiftartigen Elemente
und
dass die stiftartigen Elemente im zweiten Gegenstand festgelegt sind und über dem ersten Element einen erweiterten Querschnitt aufweisen, der grösser ist als der Querschnitt der jeweiligen Ausnehmung.

Die Erfindung ist bezüglich der verwendeten Gegenstände nicht kritisch. Bevorzugt wird die Sicherungsvorrichtung nach vorliegender Erfindung an Blechen oder Platten oder an Profilen oder Trägern angewendet.

Die Gegenstände können aus Metall, wie Eisen- oder Nichteisenmetallen, aus Kunststoffen oder aus Metall-Kunststoffverbunden sein.

Insbesondere können die Metalle Stahl, Eisen, verzinktes Eisen oder Aluminium oder dessen Legierungen sein.

Als Kunststoffe können beispielsweise Polyvinylchloride, Polyamide oder Polyester etc. angewendet werden. Die Kunststoffgegenstände können mittels Fasern, gegebenenfalls in Form von Geweben, Gewirken oder Vliessen aus anorganischen oder organischen Materialien, verstärkt sein. Beispiele dafür sind glasfaser-, aramidfaser- oder carbonfaserverstärkte Kunststoffe.

Metall-Kunststoffverbunde können Verbund- oder Schichtstoffe, beispielsweise aus einem Kunststoffkern und metallischen Deckschichten oder einem Metallkern und Kunststoffdeckschichten sein.

Bevorzugt werden Bleche und Platten oder Träger und Profile aus Aluminium oder seinen Legierungen, wobei die Träger und Profile auch stranggepresst sein können. Die Profile können auch Hohlkammerprofile sein.

Zweckmässig ist der Klebstoff ein Klebband. Das Klebband kann einen Träger, wie einen Kunststoffträger und beidseitig des Kunststoffträgers eine Klebemasse aufweisen und somit ein beidseitig oder doppelseitig klebendes Klebband sein.

Das Klebband kann auch ein Schaumstoffgewebe, Gewirke oder Vliess, beispielsweise aus natürlichen oder künstlichen Fasern sein, das mit einer Klebemasse getränkt ist und ein beidseitig oder doppelseitig klebendes Klebband darstellt.

Die Klebemasse kann auch als solche z.B. in flüssiger bis pastöser Form oder als Schaum durch streichen, rakeln, sprühen etc. aufgetragen werden.

Vorteilhaft sind Klebemassen beispielsweise auf Basis von physikalisch abbindenden Klebstoffen, wie Schmelzklebstoffen, z.B. Styrolbutadien-, Polyamid-, Ethylenvinylacetat- und Polyesterklebstoffe; Plastisolklebstoffe, z.B. PVC mit Weichmachern und Haftvermittlern; Haftklebstoffe, z.B. Kautschuke oder Polyacrylate; Kontaktklebstoffe, z.B. Polyurethan-Styrolbutadien- oder Polychloroplenklebstoffe; Lösungsmittel/Dispersionsklebstoffe; z.B. Polyurethan-, Vinylacetat-, Vinylchlorid-, Vinylidenchloridcopolymere oder chemisch abbindende Klebstoffe, wie beispielsweise Reaktionsklebstoffe des Types Epoxid plus Säureanhydride, Epoxid plus Polyamine, Polyisocyonate plus Polyole, Cyanoacrylate, Metacrylate, UP mit Styrol oder Metacrylaten, PF plus PVFM oder NBR, PJ oder Polybenzimidazole mit der Massgabe, dass solche Klebstoffe nach dem Aushärten oder Abbinden oder Haften ein elastisches Verhalten zeigen.

Bevorzugt sind doppelseitige Klebebänder, z.B. in Form geschäumter Acrylatklebstoffe. Die Dicke des Klebstoffes zwischen den Gegenständen kann beispielsweise von 0,2 mm bis 3,0 mm, bevorzugt von 0,5 mm bis 1,0 mm, betragen.

Der erste Gegenstand weist im Bereich seiner Klebefläche Ausnehmungen auf. Solche Ausnehmungen können beispielsweise eckigen oder runden Querschnittes sein und verlaufen in der Regel in senkrechter Achse durch den Gegenstand hindurch. Die Ausnehmungen können polygonal, beispielsweise dreieckig, viereckig oder sechseckig sein und sind bevorzugt rund, d.h. es sind Bohrungen. Die Bohrungen sind in der Regel zylindrisch. Die Bohrungen können auch pyramidenstumpfförmig sein oder auf der der Klebefläche entgegengesetzten Seite angesenkt sein.

Die stiftartigen Elemente können beispielsweise Schrauben, Nieten, Stifte oder Bolzen sein und bevorzugt werden Selbstbohrschrauben oder Spreiznieten. Die stiftartigen Elemente sind im zweiten Gegenstand festgelegt. Die stiftartigen Elemente können beispielsweise am zweiten Gegenstand angeklebt, angeschweisst, bevorzugt jedoch angeschraubt, eingeschraubt, eingepresst oder eingenietet werden. Die stiftartigen Elemente weisen über dem ersten Element einen erweiterten Querschnitt auf, welcher grösser ist als der Querschnitt der jeweiligen Ausnehmung. Der erweiterte Querschnitt kann beispielsweise ein Schraubenkopf, ein Nietenkopf, ein Bolzenkopf etc. sein. Bevorzugt ist die Querschnittsfläche der stiftartigen Elemente im Bereich der Ausnehmung 5 bis 30 % geringer als die Querschnittsfläche der Ausnehmung selbst.

Die stiftartigen Elemente können beispielsweise aus Kunststoff oder Metall bestehen. Bei Gegenständen aus Kunststoff sind zweckmässig auch die stiftartigen Elemente aus Kunststoff oder Metall, sind die Gegenstände aus Metall, sind zweckmässig die stiftartigen Elemente ebenfalls aus Metall, beispielsweise aus Stahl, Eisen, Buntmetall oder Aluminium oder dessen Legierungen.

Bevorzugt ist die Querschnittsfläche des erweiterten Querschnittes des stiftförmigen Elementes 50 bis 200 % grösser als die Querschnittsfläche der jeweiligen Ausnehmung im ersten Element.

Gemäss vorliegender Sicherheitsvorrichtung ist der erweiterte Querschnitt des stiftartigen Elementes, d.h. der Schraubenkopf, der Nietenkopf, der Bolzenkopf etc. direkt am zweiten Gegenstand anliegend oder berührt den zweiten Gegenstand zumindest oder ist bis zu 0,5 mm davon entfernt.

Eine Klebeverbindung enthaltend vorliegende Sicherungsvorrichtung kann beispielsweise so angelegt werden, dass am ersten Gegenstand oder am zweiten Gegenstand oder an beiden Gegenständen gleichzeitig gegenüberliegend oder wechselweise, demnach beispielsweise an Metallplatten oder an Metallprofilen, auf der für die Klebung zugedachten Seite der Klebstoff, beispielsweise das Klebband, angebracht wird. Der erste Gegenstand kann schon vorher oder anschliessend mit einer Anzahl von Ausnehmungen, beispielsweise Bohrungen, versehen werden. Zweckmässig sind 10 bis 50 Bohrungen pro Quadratmeter Klebefläche oder über die Länge verteilt 3 bis 10 Bohrungen pro Laufmeter. Der zweite Gegenstand, beispielsweise ebenfalls ein Profil oder ein Blech, wird mit der als Klebefläche zugedachten Fläche mit dem ersten Gegenstand in Berührung gebracht und gegebenenfalls, je nach Art des Klebestoffes verpresst oder erwärmt oder unter Erwärmung verpresst. Durch die Ausnehmungen des ersten Gegenstandes hindurch werden gegebenenfalls Ausnehmungen im zweiten Gegenstand angebracht. In diese Ausnehmungen im zweiten Gegenstand werden die stiftartigen Elemente eingeführt und festgelegt. Dies kann beispielsweise durch Einschrauben, Nieten oder Spreizen erfolgen. Sind die stiftartigen Elemente beispielsweise Selbstbohrschrauben oder dergleichen, erübrigt sich in der Regel das Anbringen von Ausnehmungen am zweiten Gegenstand. Durch die Ausnehmung im ersten Gegenstand hindurchgreifend werden selbstbohrende stiftartige Elemente am zweiten Gegenstand festgelegt. Die stiftartigen Elemente werden bezüglich des ersten Gegenstandes derart tief eingesetzt, dass die Unterseite des erweiterten Querschnittes des stiftartigen Elementes die Oberfläche des ersten Gegenstandes berührt, gegebenenfalls unter leichtem Druck steht oder leicht überstehend über dem ersten Gegenstand ist. Diese Massnahme ermöglicht zusammen mit der Massnahme, dass das stiftartige Element mit Spiel in der Ausnehmung des ersten Gegenstandes angeordnet ist, leichte Verschiebungen in der Horizontalen zwischen dem ersten und zweiten Gegenstand. Bewegungen der beiden Gegenstände von - oder gegeneinander in der Vertikalen werden durch die Sicherungsvorrichtung aufgefangen. Weitere Ausführungsformen können vorgesehen werden, beispielsweise kann der erste Gegenstand wechselweise Ausnehmungen und stiftartige Elemente aufweisen und entsprechend der zweite Gegenstand ebenfalls wechselweise Ausnehmungen und stiftartige Elemente aufweisen, die abwechslungsweise oder gruppenweise angeordnet sind.

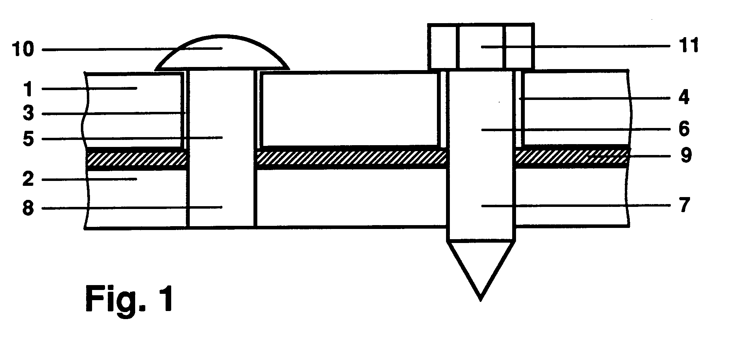

Die Figur 1 gibt beispielhaft die Verbindung von zwei Metallblechen, und die Anordnung der Sicherungsvorrichtung im Querschnitt wieder. Ein erster Gegenstand 1, im vorliegenden Fall ein Metallblech, und der zweite Gegenstand 2, im vorliegenden Fall ebenfalls ein Metallblech, sind über einen Klebstoff 9, beispielsweise in Form eines Klebebandes, haftend miteinander verbunden. Der erste Gegenstand 1 weist beispielhaft die Ausnehmungen 3 und 4, in Form von zylindrischen Bohrungen auf. Im zweiten Gegenstand 2 festgelegt, ist eine Niete 5, welche in eine vorgebohrte Öffnung im Gegenstand 2 eingesetzt wurde, wobei im Schaftteil 8 der Niete 5 Spreizungen zu einem sicheren Halt führen. Der Nietenkopf 10 überragt seitlich die Ausnehmung und ist in geringem Abstand zum ersten Gegenstand 1, während die Bohrung 3 gegenüber dem Nietenkörper 5 einen grösseren Querschnitt aufweist. In anderer beispielhafter Ausführungsform ist durch eine Bohrung 4 eine Selbstbohrschraube 6 geführt, die mit ihrem Gewinde 7 in den Gegenstand 2 eingeschraubt ist. Der Kopf 11 der Selbstbohrschraube 6 liegt leicht am ersten Gegenstand an. Mit dem Kopf 11 wird die Bohrung 4 und ein Bereich des ersten Gegenstandes überdeckt. Dies bedeutet, dass sich der erste Gegenstand 1 und der zweite Gegenstand 2 in geringem Masse in horizontaler Richtung gegeneinander bewegen können, dass eine vertikale Bewegung im wesentlichen jedoch ausgeschlossen ist.

Sollte bei hoher Beanspruchung und dem Auftreten von Schälkräften zwischen dem ersten Gegenstand 1 und dem zweiten Gegenstand 2 die Verklebung unzureichend sein, kann sich der erste Gegenstand gegen den zweiten Gegenstand über die Sicherungsvorrichtung in Form eines oder einer Mehrzahl von stiftartigen Elementen abstützen. Sobald die einwirkenden Kräfte in ihrer Wirkung nachlassen und wieder die Ruhelage eintritt, ist das Haften durch die vollflächige Verklebung gewährleistet. Insbesondere werden gewollte Verschiebungen, die durch den elastischen Klebstoff ermöglicht werden, zugelassen, ohne dass die Klebung überbeansprucht wird und ein Abplatzen oder Abschälen eintritt. Typische Festigkeiten von Verklebungen sind beispielsweise eine Zugfestigkeit 1 bis 5 N/mm², eine Zugscherfestigkeit 1 bis 5 N/mm² und eine Schälfestigkeit 0,2 bis 1 N/mm².

Vorliegende Sicherungsvorrichtung ist besonders geeignet zur Verwendung bei der Verbindung von einem ersten Gegenstand z.B. einem Blech oder Profil und einem zweiten Gegenstand, wobei der zweite Gegenstand z.B. ein Hohlprofil ist, und vorzugsweise das stiftförmige Element, vorzugsweise blind gesetzt wird. Das stiftförmige Element ist dabei insbesondere eine Selbstbohrschraube oder eine Spreizniete. Dies hat den Vorteil, dass bei einem Lösen der Sicherungsvorrichtung keine Teile in das Hohlprofil fallen und dort verbleiben. Dies hat grosse Bedeutung, wenn vorliegende Sicherungsvorrichtung an Klebeverbindungen von Profilen und Blechen benutzt wird, die für Konstruktionen im Karosseriebau, beispielsweise für Eisenbahnwagen, Omnibusse, Reisecars oder Lastkraftwagen Verwendung finden. Im Falle einer Reparatur, wenn Karosserieteile ausgetauscht werden müssen, ist es notwendig, die Profile und/oder Bleche, die miteinander verklebt und durch die erfindungsgemässe Sicherungsvorrichtung gesichert sind, zu trennen. Dann ist es vorteilhaft, wenn nicht eine der Sicherungsvorrichtungen, d.h. insbesondere des stiftförmigen Elementes, in ein Hohlprofil fallen und dort verbleiben. Beim späteren Betrieb eines Fahrzeuges, beispielsweise eines Omnibusses oder eines Reisebusses könnten solche Nietenteile durch hin- und herrollen im Hohlraum des Hohlprofiles für unerwünschte und unnötige Lärmbelästigungen sorgen. Deshalb werden insbesondere für Hohlprofile als stiftartige Elemente Selbstbohrschrauben oder Spreiznieten verwendet.

## Patentansprüche

1. Sicherungsvorrichtung für mittels elastischer Klebstoffe flächig gegeneinander haftend zusammengefügte Gegenstände,
dadurch gekennzeichnet, dass
ein erster Gegenstand eine erste Klebefläche aufweist
und
ein zweiter Gegenstand eine zweite Klebefläche aufweist
und
die Klebeflächen einander gegenüberliegen
und
zwischen den Klebeflächen ein Klebstoff angeordnet ist
und
der erste Gegenstand im Bereich der ersten Klebefläche eine oder mehrere Ausnehmungen aufweist
und
der zweite Gegenstand im Bereich der zweiten Klebefläche und durch die Ausnehmungen des ersten Gegenstandes hindurchgreifend stiftartige Elemente aufweist
und
der Querschnitt der Ausnehmungen des ersten Gegenstandes grösser ist als der Querschnitt der stiftartigen Elemente
und
dass die stiftartigen Elemente im zweiten Gegenstand festgelegt sind und über dem ersten Element einen erweiterten Querschnitt aufweisen, der grösser ist als der Querschnitt der jeweiligen Ausnehmung.

2. Sicherungsvorrichtung nach Anspruch 1, dadurch gekennzeichnet, dass der erste Gegenstand und der zweite Gegenstand Bleche, Platten, Träger oder Profile aus Metall, Kunststoff oder Metall-Kunststoffverbunden sind.

3. Sicherungsvorrichtung nach Anspruch 1, dadurch gekennzeichnet, dass der elastische Klebstoff ein Klebeband ist.

4. Sicherungsvorrichtung nach Anspruch 1, dadurch gekennzeichnet, dass das stiftartige Element eine Schraube, eine Niete oder ein Bolzen und bevorzugt eine Selbstbohrschraube oder Spreizniete ist.

5. Sicherungsvorrichtung nach Anspruch 1, dadurch gekennzeichnet, dass die Ausnehmungen Bohrungen sind.

6. Sicherungsvorrichtung nach Anspruch 1, dadurch gekennzeichnet, dass der Querschnittsfläche der stiftartigen Elemente 5 bis 30 % geringer ist als die Querschnittsfläche der Ausnehmungen.

7. Sicherungsvorrichtung nach Anspruch 1, dadurch gekennzeichnet, dass die Querschnittsfläche des erweiterten Querschnittes des stiftförmigen Elementes 50 bis 200 % grösser ist als die Querschnittsfläche der Ausnehmung.

8. Sicherungsvorrichtung nach Anspruch 1, dadurch gekennzeichnet, dass der erweiterte Querschnitt des stiftartigen Elementes die Oberfläche des zweiten Gegenstandes berührt oder bis zu 0,5 mm davon entfernt ist.

9. Sicherungsvorrichtung nach Anspruch 1, dadurch gekennzeichnet, dass der erweiterte Querschnitt des stiftartigen Elementes ein Schraubenkopf, ein Nietenkopf oder ein Bolzenkopf ist.

10. Verwendung der Sicherungsvorrichtung nach Anspruch 1, zur Verbindung von einem ersten Gegenstand, vorzugsweise einem Blech oder Profil, und einem zweiten Gegenstand, vorzugsweise einem Hohlprofil.
